# FASCICULE DE BREVET EUROPEEN

(11) **EP 3 407 431 B1**
(45) Date de publication et mention de la délivrance du brevet: **10.11.2021**
(21) Numéro de dépôt: 18173290.0
(22) Date de dépôt: 18.05.2018
(51) Int. Cl.: H01R 13/434, H01R 13/426, G02B 6/38, H01R 13/621, H01R 13/74, H01R 107/00, H01R 13/625

(54) **CONNECTEUR COMPACT**
KOMPAKTSTECKER
COMPACT CONNECTOR

(30) Priorité: 23.05.2017 FR 1754572
(43) Date de publication de la demande: 28.11.2018
(73) Titulaire: AXON CABLE, 51210 Montmirail (FR)
(72) Inventeur: GILBERT, Erwan, 51200 Epernay (FR)
(74) Mandataire: Cabinet Beau de Loménie

(56) Documents cités:
- CN-U- 201 946 850
- DE-A1-102013 209 533
- US-B1- 7 955 142

## Description

### DOMAINE DE L'INVENTION

L'invention concerne un connecteur pour la connexion d'au moins deux câbles à au moins deux câbles correspondants. Chaque câble peut ici comporter un ou plusieurs conducteurs électriques, et/ou un ou plusieurs conducteurs de lumière, c'est-à-dire une ou des fibres optiques.

Plus précisément, le connecteur constitue un premier connecteur qui est configuré pour être lui-même fixé à un deuxième connecteur. Lesdits au moins deux câbles sont fixés audit premier connecteur et lesdits au moins deux câbles correspondants sont fixés au deuxième connecteur. Aussi, lorsque l'on assemble ensemble le premier et le deuxième connecteur, on connecte ensemble lesdits au moins deux câbles avec lesdits aux moins deux câbles correspondants.

### ARRIERE-PLAN DE L'INVENTION

Différents types de connecteurs pour connecter des câbles sont connus, par exemple par les documents DE 10 2013 209533, US7955142 et CN201946850U. Le document DE 10 2013 209533 A1 dévoile en effet un connecteur comprenant un boîtier, et un ensemble de fixation de câble, dans lequel le boîtier présente un logement interne débouchant par une ouverture dans une face arrière du boîtier; l'ensemble de fixation de câble présente un axe, et comporte un contact et un manchon, ledit contact étant configuré pour être fixé à une extrémité d'un câble préalablement passé à travers le manchon; le connecteur présente, pour l'ensemble de fixation de câble, une connexion baïonnette permettant de monter l'ensemble de fixation de câble au moins en partie dans le logement interne du boîtier; et le boîtier et l'ensemble de fixation de câble sont configurés de telle sorte que, lors dudit montage, l'ensemble de fixation de câble est introduit par ladite ouverture dans le boîtier.

Il existe de plus de nombreux types de connecteurs pour connecter ensemble au moins deux câbles, de la manière indiquée ci-dessus.

Il existe notamment un connecteur comprenant un boîtier, et plusieurs ensembles de fixation de câble. Les différents ensembles de fixation de câble sont tous identiques. Chaque ensemble de fixation de câble sert à fixer l'un des câbles au boîtier. Tous les câbles sont fixés au boîtier via la face arrière de celui-ci.

Aussi, pour permettre la fixation des ensembles de fixation de câble, le boîtier présente des ouvertures dans sa face arrière, à savoir autant d'ouvertures qu'il y a de câbles à fixer.

Chaque ensemble de fixation de câble comprend un contact, un ressort, et un manchon.

Le contact est une pièce (ou un ensemble de pièces) d'extrémité, fixé à l'extrémité du câble pour assurer la connexion avec un contact correspondant d'un autre ensemble de fixation avec lequel l'ensemble de fixation considéré doit être connecté.

Dans le connecteur, considéré ici comme étant le premier connecteur en faisant référence à l'explication donnée précédemment, la fonction du contact est définie en liaison avec le contact correspondant du deuxième connecteur : le contact est une pièce (ou un ensemble de pièces) de terminaison, qui est apte, en coopérant avec le contact correspondant du deuxième connecteur, à établir la connexion entre le ou les conducteurs électriques ou de lumière du câble et le ou les conducteurs électriques ou de lumière du câble correspondant fixé au deuxième connecteur.

Au sein de chaque ensemble de fixation de câble, chaque contact est configuré pour être fixé à une extrémité de l'un des câbles préalablement passé à travers le manchon, et pour être alors monté suivant une direction d'insertion en passant à travers l'une des ouvertures de la face arrière du boîtier. La direction d'insertion est la même pour tous les ensembles de fixation de câble.

Les connecteurs de ce type assurent la fonction de connexion de manière très satisfaisante ; cependant, ils ne sont pas très compacts, ce qui peut poser problème pour certaines applications.

### OBJET ET RESUME DE L'INVENTION

Aussi, l'objectif de l'invention est de proposer un connecteur (un 'premier connecteur') auquel un certain nombre de câbles peuvent être fixés de manière à être connectés à un même nombre de câbles correspondants par l'intermédiaire d'un deuxième connecteur, et qui présente une compacité accrue par rapport au connecteur indiqué précédemment.

Cet objectif est atteint grâce à un connecteur selon la revendication 1.

De plus, lorsque le connecteur est monté, le premier et le deuxième ensemble de fixation de câble (et éventuellement d'autres ensembles de fixation de câble) sont placés au moins en partie dans le même logement. L'expression 'dans le même logement' signifie ici que les parties du logement dans lesquelles sont disposées les parties du premier et du deuxième ensemble de fixation de contact qui sont dans le boîtier communiquent, c'est-à-dire ne sont pas entièrement séparées l'une de l'autre par une cloison. Par conséquent, en position montée dans le boîtier, les parties du premier et du deuxième ensemble de fixation de contact qui sont dans le boîtier sont au moins en partie l'une en face de l'autre. Ainsi, généralement les portions du premier et du deuxième ensemble de fixation de câble les plus proches l'une de l'autre se trouvent directement en regard l'une de l'autre.

Le premier et le deuxième ensemble de fixation de câble peuvent être placés extrêmement près l'un de l'autre. Grâce à ces dispositions, le boîtier du connecteur peut être de taille réduite, l'entraxe entre les ensembles de fixation de câble peut être faible, et le connecteur peut être compact.

Le connecteur défini précédemment comprend au moins deux ensembles de fixation de câbles et peut naturellement en comprendre un nombre quelconque strictement supérieur à deux.

Le contact a la même fonction que le contact du connecteur présenté auparavant dans la section 'Arrière-plan de l'invention'.

Chaque câble peut être un câble comprenant un ou plusieurs conducteurs électriques et/ou une ou plusieurs fibres optiques. Par conséquent, chaque contact peut être un contact prévu pour un ou plusieurs conducteurs électriques et/ou une ou plusieurs fibres optiques.

Bien que seule l'ouverture du logement interne du boîtier en face arrière ait été mentionnée ci-dessus, le logement interne présente naturellement en outre au moins une autre ouverture pour la connexion des contacts des ensembles de fixation, normalement vers l'avant.

Le boîtier peut être réalisé en une ou plusieurs parties.

Lorsque les différentes surfaces externes de l'ensemble de fixation de câble, notamment les surfaces périphériques externes des contacts, sont en matériau isolant, le logement des ensembles de fixation peut être en matériau conducteur, par exemple en métal ; le boîtier peut être par exemple constitué par une seule pièce métallique, notamment usinée. Cela peut être le cas par exemple si les contacts présentent une gaine extérieure isolante.

Inversement, au cas où l'extérieur des contacts est en matériau conducteur, notamment métallique, et plus particulièrement lorsqu'un signal ou de l'énergie est transmis par ce matériau, les contacts doivent être isolés électriquement les uns des autres dans le connecteur. Dans ce cas, de préférence le logement est formé en matériau isolant électriquement, par exemple en matière plastique (polymère ou autre).

Le boîtier peut alors par exemple être formé par un insert isolant placé à l'intérieur d'une coque extérieure métallique. Il peut sinon éventuellement être entièrement réalisé en matière plastique.

Le montage au moins du premier et du deuxième ensembles de fixation de câble dans le boîtier est fait grâce aux connexions baïonnette prévues à cet effet. Une connexion baïonnette est un agencement ou une configuration spécifique de deux pièces permettant d'assembler celles-ci en réalisant deux mouvements, à savoir un mouvement de translation relative d'une pièce par rapport à l'autre suivi par un mouvement de rotation relative d'une pièce par rapport à l'autre. Une connexion baïonnette peut aussi être appelée connexion 'quart de tour'. Le terme 'quart de tour' n'implique en aucune manière ici que la rotation soit égale à un quart de tour. La rotation peut être comprise entre 20 et 45°, par exemple.

On comprend donc que dans le connecteur, du fait des connexions baïonnette, chacun desdits premier et deuxième ensemble de fixation de câble est configuré pour être monté en insérant l'ensemble de fixation de câble axialement dans l'ouverture du boîtier jusqu'à une certaine position axiale prédéterminée, puis en faisant tourner le manchon autour de l'axe de l'ensemble de fixation.

Le montage de l'ensemble de fixation au moins en partie dans le logement interne du boîtier a pour but et pour effet de fixer l'ensemble de fixation au boîtier. Par sécurité, des moyens supplémentaires peuvent être prévus pour assurer que l'ensemble de fixation reste durablement dans la position de montage voulue et ne se démonte pas au fil du temps.

Dans ce but, dans un mode de réalisation le connecteur comprend, pour au moins un desdits premier et deuxième ensemble de fixation de câble, un mécanisme d'encliquetage (ou clipsage) permettant à l'ensemble de fixation de câble, à l'issue du montage, d'être verrouillé en position montée, et ainsi d'être maintenu en position fixe par rapport au boîtier. L'encliquetage (ou clipsage) est un mode d'assemblage de deux parties par engagement et déformation élastique (en général déformation locale, par exemple d'une languette, ou par déformation de l'ensemble des pièces impliquées dans l'assemblage). Lorsque les deux parties sont engagées dans la position d'encliquetage, les parties ont généralement repris leur forme initiale et ne présentent plus de déformation élastique (ou une déformation élastique moindre). Lorsque les deux parties sont engagées l'une avec l'autre dans la position d'encliquetage, elles coopèrent l'une avec l'autre de manière à s'opposer, voire bloquer, les mouvements relatifs desdites pièces dans le sens du dégagement (sens opposé au sens de l'engagement).

Ainsi par exemple, dans un mode de réalisation chacun des premier et deuxième ensemble de fixation de câble est configuré pour être monté dans le boîtier en insérant l'ensemble de fixation de câble dans l'ouverture du boîtier jusqu'à une première position axiale, puis en faisant tourner le manchon autour de l'axe de l'ensemble de fixation, puis en relâchant le manchon, l'ensemble de fixation de câble venant alors se bloquer axialement par rapport au boîtier sous l'action de moyens de rappel. Ces moyens de rappel peuvent par exemple être un ressort.

Par ailleurs, à l'issue du montage, le boîtier et le manchon peuvent être agencés de différentes manières pour assurer la fixation de l'ensemble de fixation de câble au boîtier.

De préférence, mais en particulier pour des connexions par rotation-translation, on peut prévoir de premiers moyens de maintien pour assurer le blocage de tous les degrés de liberté du manchon (par rapport au boîtier) sauf une translation par rapport à l'axe de l'ensemble de fixation et une rotation autour de cet axe, ainsi que de deuxièmes et troisièmes moyens de maintien pour assurer le blocage du manchon respectivement en translation suivant la direction d'insertion et en rotation autour de cet axe.

Pour réaliser les premiers moyens de maintien, dans un mode de réalisation, pour chacun desdits premier et deuxième ensemble de fixation de câble :
- la connexion baïonnette comporte au moins une surface de guidage formée dans le boîtier ; et
- l'ensemble de fixation de câble et le boîtier sont agencés de telle sorte que lorsque l'ensemble de fixation de câble est monté au moins en partie dans le logement interne du boîtier, ladite au moins une surface de guidage coopère avec le manchon de manière à bloquer tous les degrés de liberté du manchon sauf une translation par rapport à l'axe de l'ensemble de fixation et une rotation autour de cet axe. La ou les surfaces de guidage constituent donc les premiers moyens de maintien. La ou les surface(s) de guidage peuvent notamment être des surfaces d'un cylindre à base circulaire.

Dans ce mode de réalisation, pour chaque ensemble de fixation de câble, la fixation du câble est assurée en grande partie par la ou les surfaces de guidage. Ces surfaces permettent de bloquer (cependant éventuellement avec une certaine tolérance, un certain jeu) tous les degrés de liberté du manchon sauf la translation par rapport à l'axe de l'ensemble de fixation et une rotation autour de cet axe. Le plus souvent, le manchon est de forme extérieure cylindrique. La ou les surfaces de guidage ont une forme également cylindrique, de diamètre au moins égal à celui du manchon, ce qui permet d'assurer que le manchon est disposé de manière coaxiale aux surfaces de guidage et d'assurer ainsi le maintien en position du manchon (hormis sa translation axiale et sa rotation par rapport à l'axe de l'ensemble de fixation).

La particularité du connecteur selon l'invention est que, contrairement au connecteur présenté auparavant, au moins pour les deux ensembles de fixation de câble, les contacts sont configurés pour être montés suivant la direction d'insertion en passant à travers la même ouverture de la face arrière du boîtier. Dans le mode de réalisation présenté précédemment dans lequel le boîtier présente une ou des surfaces de guidage, de préférence, au niveau axialement de ladite au moins une surface de guidage, au moins pour lesdits premier et deuxième ensemble de fixation de câble, ladite au moins une surface de guidage de l'ensemble de fixation de câble considéré ne s'étend que sur une partie de la périphérie du manchon, et laisse des portions des manchons du premier et du deuxième ensemble de fixation de câble les plus proches l'une de l'autre directement en regard l'une de l'autre, ces portions des manchons du premier et du deuxième ensemble de fixation de câble n'étant séparées l'une de l'autre par aucune cloison du boîtier.

Cet agencement permet de positionner les contacts du premier et du deuxième ensemble de fixation de câble, au sein du logement du boîtier, très près l'un de l'autre. Grâce à cet agencement, l'entraxe entre les deux ensembles de fixation, en position montée, peut être réduit au minimum ; notamment, les manchons des deux ensembles de fixation en position montée peuvent n'être séparés que par une distance très faible ; il n'est pas nécessaire de prévoir une distance minimum, comme ce serait le cas si une paroi du boîtier devait séparer les deux manchons l'un de l'autre.

L'entraxe entre le premier et le deuxième ensemble de fixation de câble peut par suite être inférieur à 1,5 fois, voire 1,2 fois le diamètre externe du manchon (ce diamètre externe concerne la partie du manchon qui se trouve dans le boîtier en position montée, et qui coopère avec la ou les surfaces de guidage. Le manchon peut comporter une partie située hors du boîtier en position montée ; cette partie peut être de forme quelconque, notamment de forme non cylindrique).

Dans un mode de réalisation de l'invention, en vue suivant la direction d'insertion, au moins pour un desdits ensembles de fixation de câble, ladite au moins une surface de guidage s'étend (éventuellement, s'étend uniquement) sur deux secteurs angulaires opposés l'un à l'autre.

De préférence, ces deux secteurs angulaires sont orientés dans des directions globalement perpendiculaires ou obliques par rapport à la droite passant par les axes du premier et du deuxième ensemble de fixation de câbles. Un tel mode de réalisation est choisi notamment lorsque le connecteur comporte trois ensemble de fixation de câble, et lorsque ces trois ensembles de fixation de câble sont placés juste à côté les uns des autres en position montée (alignés). Pour l'ensemble de fixation de câble placé entre les deux autres (en position montée), le boîtier présente alors exactement deux surfaces de guidage situées en vis-à-vis l'une de l'autre et entre lesquelles se trouve le manchon, en position montée.

Par ailleurs, pour assurer le blocage axial du contact dans le boîtier, le connecteur peut être agencé de différentes manières.

Les deuxièmes moyens de maintien peuvent notamment comporter un ressort, qui forme un mécanisme d'encliquetage. En complément de la ou des surfaces de guidage, la fixation de l'ensemble de fixation de câble est alors assurée par la coopération du boîtier, du ressort et du contact avec le manchon. Le ressort est généralement du type hélicoïdal et est alors placé autour de l'extrémité du câble. Dans un mode de réalisation, le ressort est au moins en partie, ou éventuellement entièrement disposé à l'intérieur du manchon, lorsque l'ensemble de fixation est en position montée.

Le ressort est utilisé en compression. En position montée, il applique des forces inverses respectivement sur le boîtier et sur le contact, ce qui conduit le contact à être poussé vers l'avant (c'est-à-dire dans la direction d'insertion) par rapport au boîtier. Le boîtier est agencé de manière à bloquer axialement le contact.

Ainsi dans un mode de réalisation, pour au moins un desdits premier et deuxième ensemble de fixation de câble :
le mécanisme d'encliquetage comprend un ressort ;
le contact est configuré pour, après avoir été fixé à l'extrémité du câble préalablement passé à travers le manchon, être monté dans une direction d'insertion suivant l'axe de l'ensemble de fixation en passant à travers l'ouverture de la face arrière du boîtier ;
l'ensemble de fixation de câble et le boîtier sont agencés de telle sorte que lorsque l'ensemble de fixation de câble est en position montée, le ressort est comprimé, et, en prenant appui sur le boîtier, appuie sur le contact suivant la direction d'insertion, et par suite bloque axialement le contact par rapport au boîtier suivant la direction d'insertion.

Pour permettre que le ressort appuie sur le contact suivant la direction d'insertion, dans un mode de réalisation le contact présente une surface d'appui de ressort du contact disposée de telle sorte que le ressort disposé autour de l'extrémité du câble puisse appliquer une force de compression à la surface d'appui de ressort du contact suivant une direction axiale de celui-ci. En particulier, dans un mode de réalisation, pour au moins un ensemble de fixation de contact le contact a une forme extérieure sensiblement cylindrique, et la surface d'appui de ressort du contact est formée sur une bride externe du contact.

D'autre part, en ce qui concerne l'appui du ressort sur le boîtier, cet appui peut être direct (le ressort est en contact avec le boîtier) ou indirect. Dans ce dernier cas, par exemple le ressort peut être en appui sur le manchon, et le manchon est en appui sur le boîtier. Pour permettre cet appui, dans un mode de réalisation le manchon présente une surface d'appui de ressort du manchon disposée de telle sorte que le ressort disposé autour de l'extrémité du câble puisse appliquer une force de compression à la surface d'appui de ressort du manchon suivant une direction axiale de celui-ci.

Dans ce but, dans un mode de réalisation le manchon présente un alésage intérieur cylindrique et la surface d'appui de ressort du manchon est formée sur un épaulement agencé dans cet alésage.

Il faut noter que dans certains modes de réalisation, le connecteur assure le blocage axial du contact de deux manières différentes selon qu'il est connecté ou non avec un 'deuxième connecteur' correspondant.

Selon un premier mode de blocage, en l'absence du 'deuxième connecteur' cité auparavant, c'est le boîtier lui-même qui bloque le contact vers l'avant, en contrant la force appliquée au contact par le ressort. (Le contact se bloque vers l'avant contre une surface du boîtier).

Inversement, lorsque le connecteur (considéré comme étant un premier connecteur) est fixé au deuxième connecteur, le blocage axial des contacts vers l'avant se fait de manière différente : les contacts du premier connecteur et du deuxième connecteur sont alors engagés en prise mutuelle. Avantageusement, dans cette position le blocage axial de chacun des contacts du premier et du deuxième connecteur est alors assuré non pas par le boîtier bloquant le contact, mais par les contacts du deuxième connecteur engageant le contact du premier connecteur. Les ressorts des ensembles de fixation de contact servent alors à maintenir les contacts du premier connecteur en contact permanent avec les contacts du deuxième connecteur. Grâce à cela, avantageusement un contact de très bonne qualité est établi entre les contacts du premier et du deuxième connecteur. Le contact est alors un contact à fonction ressort intégrée.

Dans un mode de réalisation du connecteur selon l'invention, la force appliquée par le ressort au boîtier vers l'arrière est transmise via le manchon : la partie arrière du ressort exerce une force vers l'arrière sur le manchon, et le manchon à son tour exerce cette force sur le boîtier. Le manchon doit donc pouvoir transmettre cette force au boîtier.

Dans ce but, dans un mode de réalisation préférentiel, le manchon présente au moins un ergot de blocage axial, agencé en saillie sur sa surface externe ; et

le boîtier et l'ensemble de fixation de câble considéré sont configurés de telle sorte qu'en position montée, sous l'effet de la pression du ressort, le manchon est poussé vers l'arrière dans la position montée dans laquelle ledit au moins un ergot de blocage axial est en appui sur au moins une surface de blocage axial de manchon du boîtier, qui bloque ledit au moins un ergot de blocage axial vers l'arrière et empêche ainsi tout déplacement du manchon vers l'arrière.

Dans une variante préférentielle, le manchon de l'ensemble de fixation de câble considéré et le boîtier sont configurés de telle sorte que :
- le manchon, placé dans une première position angulaire, peut être introduit dans le logement du boîtier suivant la direction d'insertion, puis
- le manchon peut être alors amené à tourner autour de l'axe de l'ensemble de fixation pour atteindre une deuxième position angulaire, dans laquelle ladite au moins une surface de blocage axial de manchon du boîtier bloque ledit au moins un ergot de blocage axial vers l'arrière.
de préférence et au moins pour l'ensemble de fixation de câble considéré, le manchon de l'ensemble de fixation de câble considéré et le boîtier sont configurés de telle sorte que :
- le manchon de l'ensemble de fixation de câble considéré, placé dans une première position angulaire, peut être introduit (au moins en partie) dans le logement du boîtier suivant la direction d'insertion (il atteint alors une première position axiale), puis
- le manchon peut être alors amené à tourner autour de l'axe de l'ensemble de fixation pour atteindre une deuxième position angulaire dans laquelle une surface de blocage axial de manchon du boîtier bloque ledit au moins un ergot de blocage axial (et par conséquent le manchon) vers l'arrière, et empêche ainsi tout déplacement du manchon vers l'arrière.

Enfin, pour assurer le blocage en rotation du manchon par rapport au boîtier, il est préférable de prévoir également les troisièmes moyens de maintien mentionnés précédemment.

Dans ce but, dans un mode de réalisation, au moins pour un ensemble de fixation de câble considéré, le manchon de l'ensemble de fixation de câble considéré et le boîtier sont configurés de telle sorte que :
- le boîtier présente au moins une surface de blocage en rotation, qui n'est pas de révolution autour de la direction d'insertion ; et
- le manchon présente au moins un ergot anti-rotation, agencé en saillie sur sa surface externe.

De plus, l'ensemble de fixation de câble considéré et le boîtier sont alors agencés de telle sorte que lors du montage de l'ensemble de fixation de câble considéré au moins en partie dans le logement interne du boîtier :
- l'ensemble de fixation de câble est introduit dans le logement du boîtier suivant la direction d'insertion par l'ouverture du boîtier jusqu'à ce que le manchon atteigne axialement une première position axiale, et angulairement, une première position angulaire ; puis
- le manchon tourne alors autour de l'axe de l'ensemble de fixation pour atteindre une deuxième position angulaire ;
- le manchon coulisse alors axialement par rapport au boîtier pour atteindre une deuxième position axiale située en arrière de la première position axiale ; et
- lorsque le manchon est dans la deuxième position axiale, l'ergot anti-rotation coopère avec ladite au moins une surface de blocage en rotation de manière à empêcher une rotation du manchon autour de l'axe de l'ensemble de fixation.

Enfin, le connecteur peut présenter avantageusement des repères visuels (un repère par ensemble de fixation de câble) afin de permettre de s'assurer que les différents câbles sont convenablement fixés au boîtier.

Ainsi dans un mode de réalisation, au moins pour l'ensemble de fixation de câble considéré, le manchon comporte un repère, l'ensemble de fixation de câble et le manchon sont configurés de telle sorte que lorsque le manchon est dans la première position axiale, le repère n'est pas visible sur un côté arrière du boîtier, alors que lorsque le manchon est dans la deuxième position axiale, le repère est visible, et de préférence dépasse, sur le côté arrière du boîtier. Le repère sert de témoin de fixation et prouve à l'opérateur en charge de la fixation des différents câbles que le manchon est bien en position montée et donc que le câble est convenablement fixé.

Le repère peut par exemple être un repère de couleur et/ou une saillie aménagé(e)(s) sur la surface externe du manchon un repère de couleur prévu sur la surface externe du manchon et/ou une saillie aménagée sur cette surface.

Avantageusement, le manchon et le boîtier peuvent être configurés de telle sorte que le repère dépasse vers l'arrière (et non radialement) lorsque le manchon est en position montée. Ainsi, la surface radialement externe du boîtier n'a à comporter de passage radial permettant de contrôler le bon positionnement du manchon. Par suite, on évite d'affaiblir mécaniquement le boîtier par la présence d'un tel passage radial.

De plus, le repère peut être réalisé sous la forme d'une nervure axiale, notamment de forme extérieure cylindrique. Par ailleurs, les surfaces internes du logement aménagées pour coopérer avec les ergots de blocage axial peuvent également être formées sous la forme de surfaces cylindriques. Par suite, la surface interne du boîtier peut être usinée particulièrement facilement, par exemple avec des fraises deux tailles, et en suivant des parcours d'outils simples.

### BREVE DESCRIPTION DES DESSINS

L'invention sera bien comprise et ses avantages apparaîtront mieux à la lecture de la description détaillée qui suit, d'un mode de réalisation représenté à titre d'exemple non limitatifs. La description se réfère aux dessins annexés, sur lesquels :
- la figure 1 est une vue schématique en perspective d'un mode de réalisation d'un connecteur selon l'invention ;
- la figure 2 est une vue de dessus du connecteur de la figure 1, connecté à un deuxième connecteur correspondant ;
- les figures 3A et 3B sont des vues en coupe du connecteur de la figure 1 dans un plan perpendiculaire à la direction d'insertion, immédiatement après l'insertion des ensembles de fixation de câble dans le boîtier et avant d'avoir fait tourner les manchons ; la figure 3A est une vue vers l'arrière alors que la figure 3B est une vue vers l'avant ;
- la figure 3C est une vue en coupe longitudinale du connecteur de la figure 1, à l'étape de montage représentée sur les figures 3A et 3B ;
- la figure 4 est une vue en coupe du connecteur de la figure 1 dans un plan perpendiculaire à la direction d'insertion, vers l'arrière, après l'insertion des ensembles de fixation de câble dans le boîtier et après avoir fait tourner les manchons, mais avant de les avoir relâchés ;
- la figure 5 est une vue en coupe du connecteur de la figure 1 dans un plan perpendiculaire à la direction d'insertion, vers l'arrière, après l'insertion des ensembles de fixation de câble dans le boîtier, après avoir fait tourner et après avoir relâché les manchons ; le connecteur est donc en position montée ; et
- la figure 6 est une vue en coupe longitudinale du connecteur de la figure 1, en position montée.

### DESCRIPTION DETAILLEE DE L'INVENTION

En faisant référence aux différentes figures, un connecteur 10 représentant un exemple de mode de réalisation de l'invention va maintenant être décrit.

Le connecteur 10 comprend un boîtier 20 et quatre ensembles de fixation de câble 30A,30B,30C,30D identiques les uns aux autres. Chaque ensemble de fixation de câble comprend un contact (32A,32B,32C,32D), un ressort (34A,34B,34C,34D) et un manchon (36A,36B,36C,36D).

Dans ce qui suit conventionnellement, les lettres A,B,C,D placées après une référence numérique désignent respectivement un même composant pour le premier, deuxième, troisième ou respectivement le quatrième ensemble de fixation de câble. La référence numérique seule désigne alors l'ensemble des quatre composants : par exemple, les manchons 36.

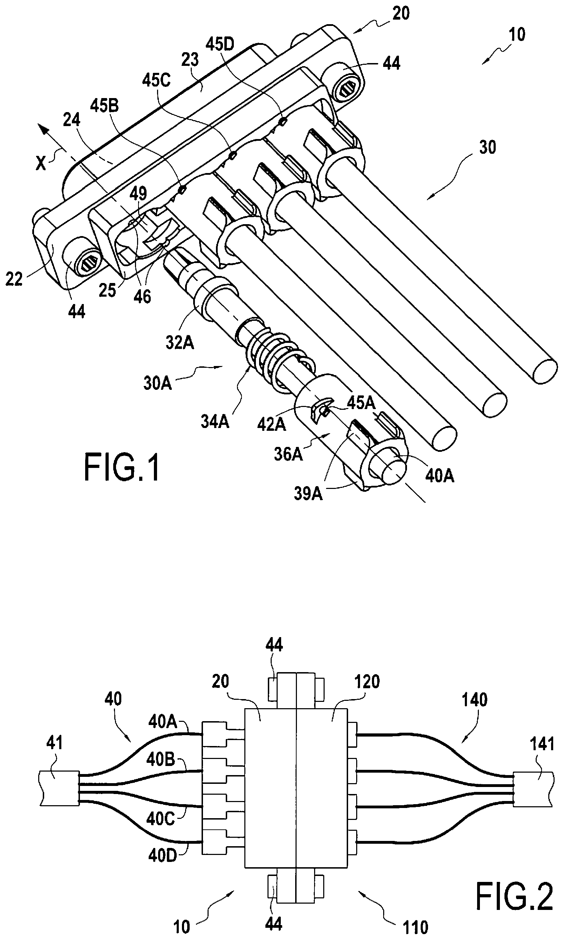

Le connecteur 10 constitue un premier connecteur prévu pour être fixé à un deuxième connecteur 110 correspondant (Fig.2). Le connecteur 10 peut être raccordé à quatre câbles 40. Lorsque le connecteur 110 est de son côté raccordé à quatre câbles 140, les connecteurs 10 et 110 conjointement permettent de raccorder les quatre câbles 40 aux quatre câbles 140 en parallèle. Les câbles 40 sont rassemblés, à distance du connecteur 10, dans une gaine 41 ; Les câbles 140 sont rassemblés, à distance du connecteur 110, dans une gaine 141. Le boîtier 20 est fixé au boîtier 120 par des vis 44.

Une différence relativement importante entre le connecteur 10 et le connecteur 110 est que dans le connecteur 10 les contacts sont à 'fonction ressort intégrée', alors qu'au contraire dans le connecteur 110 les contacts sont fixes, c'est-à-dire sont maintenus en position fixe par rapport au boîtier 120.

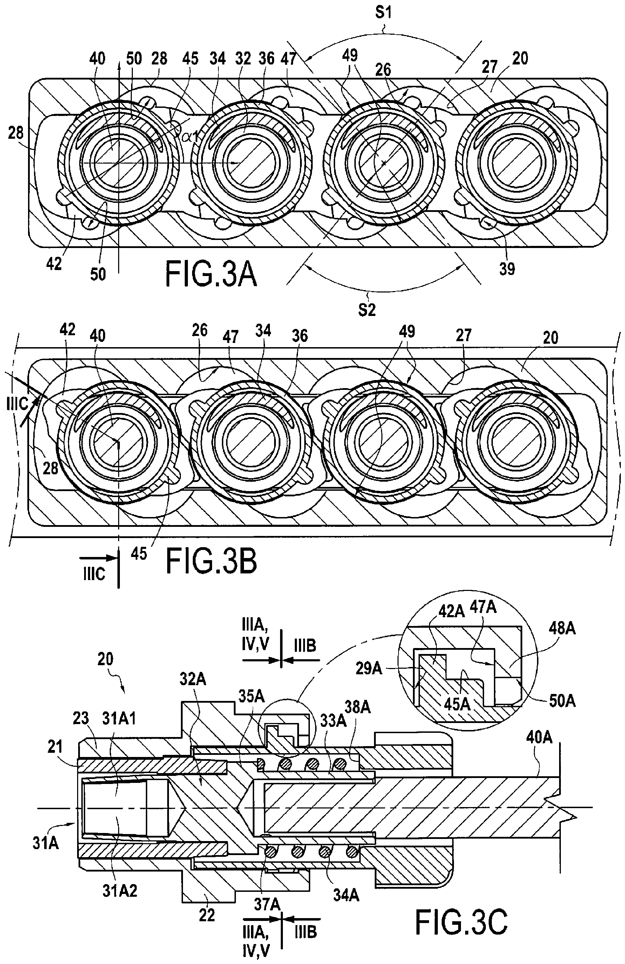

Le boîtier 20 est un boîtier réalisé en deux parties. Il comporte un insert 21 en matière plastique injectée et/ou usinée, placé à l'intérieur d'une coque 23 en aluminium fabriquée par usinage (Fig.3). Il présente une plateforme 22, dont les extrémités sont traversées par deux vis 44 qui servent à fixer le connecteur 10 sur le connecteur 110.

Hormis la plateforme 22, le boîtier 20 a une forme générale de parallélipipède rectangle disposé entre une face avant 24 et une face arrière 25. La face arrière 25 est percée par une large ouverture servant à faire passer les ensembles de fixation 30.

Les quatre ensembles de fixation 30 étant identiques, la description du connecteur 10 va être faite simplement en faisant référence à l'ensemble 30A.

L'ensemble de fixation de câble 30A comporte le contact 32A, le ressort 34A et le manchon 36A (Fig.1, 3). Il sert à fixer le câble 40A au boîtier 20.

Dans l'exemple présenté, le câble 40A est constitué par un simple conducteur électrique en cuivre. Le contact 32A est un contact formé également en cuivre par décolletage, et serti à l'extrémité du câble 40A. L'extrémité avant 31A du contact 32A est formée avec quatre languettes 31A1,31A2,31A3,31A4 prévues pour s'insérer à l'intérieur d'un contact correspondant du connecteur 110.

L'extrémité arrière 33A du contact 32A a une forme de manchon, c'est-à-dire de cylindre creux. L'alésage intérieur est occupé par l'extrémité du câble 40A, cette partie cylindrique 33A étant précisément sertie sur l'extrémité du câble. Le ressort 34A est disposé autour du cylindre 33A.

A peu près à distance égale de ses extrémités, le contact 32A présente une bride 35A. Du côté arrière, cette bride présente une surface 37A dont la normale est dirigée dans la direction arrière. Cette surface constitue une surface d'appui de ressort de contact : c'est sur elle que s'appuie l'extrémité avant du ressort 34A.

Le manchon 36A a par définition une forme générale de cylindre creux. L'alésage intérieur qui le traverse suivant la direction d'insertion (en position montée) présente une première partie dont le diamètre est légèrement plus grand que le diamètre extérieur du ressort 34A, et qui sert précisément à recevoir le ressort 34A. Plus vers l'arrière, cette partie d'alésage de plus grand diamètre se prolonge vers une partie d'alésage de plus petit diamètre, dont le diamètre sert simplement à faire passer avec jeu le câble 40A.

Au niveau du changement de diamètre de l'alésage intérieur du manchon 36A est formée une surface d'appui de ressort 38A sur laquelle s'appuie l'extrémité arrière du ressort 34A.

La surface externe du manchon 36A est illustrée notamment par la figure 1. A son extrémité arrière, elle comporte des ailettes 39A qui servent à tenir le manchon et notamment à le faire tourner au moment de sa mise en place, comme cela va être décrit plus loin.

De plus, à peu près à un tiers de son extrémité avant, la surface externe du manchon 36A comporte deux ergots 42 de blocage axial.

Ces ergots sont agencés en saillie sur la surface externe du manchon 36A. Ils permettent d'empêcher un déplacement axial du manchon par rapport au boîtier 20 vers l'arrière de la manière suivante.

Il faut tout d'abord présenter la forme du logement 26 et de son ouverture. En vue depuis l'arrière, la forme de l'ouverture est définie par son contour extérieur 27.

Le logement 26 est agencé de manière à recevoir (en partie) les ensembles de fixation de contact 30. Il maintient notamment des parties cylindriques des manchons 36 en bloquant tous les degrés de liberté de ces manchons sauf pour chacun la translation par rapport à l'axe de l'ensemble de fixation dont il fait partie et la rotation autour de cet axe. Ce maintien est assuré par des surfaces cylindriques 49 aménagées dans le logement 26 qui constituent les surfaces de guidage au sens de l'invention.

Ces surfaces de guidage 49 s'étendent sur deux secteurs angulaires S1 et S2 globalement opposés l'un à l'autre (Fig.3A).

Le diamètre des surfaces de guidage 49 est fixé de telle sorte que les quatre manchons 36 puissent passer dans le contour 27 pour s'insérer dans le logement 26.

De plus, dans la position angulaire des manchons 36 prévue pour l'insertion des manchons (représentée sur les Figs.3A, 3B et 3C), il faut que les ergots 42 puissent pénétrer dans le logement 26. Dans ce but, pour chaque ensemble 30, le contour 27 comporte des parties en saillie 28 (la plupart sont en arc de cercle) qui font saillie vers l'extérieur et permettent le passage des ergots 42. L'intérieur du logement 26 est prévu pour que les ergots 42 puissent pénétrer à l'intérieur du logement lorsqu'un ensemble de fixation de câble 30 est monté dans le boîtier 20.

Du fait de l'agencement du boîtier 20 et des ensembles de fixation 30, la connexion des ensembles de fixation au boîtier est de type à baïonnette.

Le montage d'un ensemble de fixation de câble 30, par exemple l'ensemble 30A, dans le connecteur 10 se fait en réalisant les opérations suivantes.

Dans une première étape (Figs.3A, 3B et 3C), on déplace l'ensemble de fixation de câble 30A en translation suivant la direction d'insertion jusqu'à ce que le manchon atteigne une première position d'insertion dans laquelle les ergots 42A buttent contre une surface 29A du boîtier. Pendant toute cette translation, le manchon reste en position angulaire d'insertion. Dans cette position, l'ergot 42A forme un angle α1 par rapport à la direction horizontale représentée sur la figure 3A.

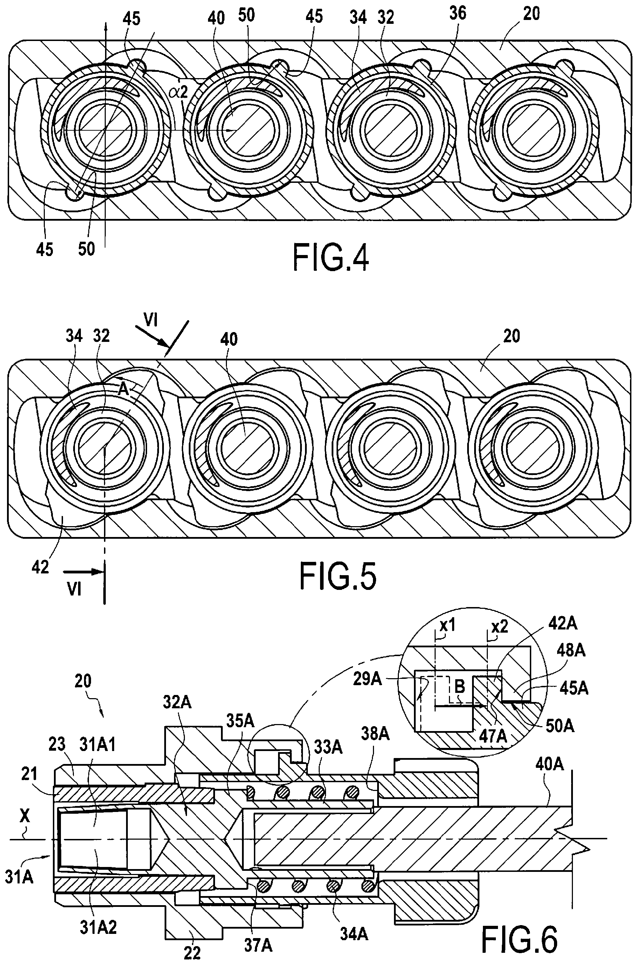

Dans une deuxième étape, on fait alors tourner le manchon 36 à la main jusqu'à ce qu'il atteigne la position angulaire finale, illustrée sur la Fig.4 (angle α2). Ce mouvement de rotation se bloque lorsque les ergots 42A viennent en butée contre la paroi interne du logement 26 (flèche A, Fig.5). Suite à cette rotation, les ergots 42A se retrouvent placés, en vue depuis la direction arrière, au moins en partie derrière une partie 48 située à l'arrière 25 du boîtier 20 et qui se trouve en regard d'une partie de la surface 29A.

Lorsque le connecteur 10 est en position montée, cette partie 48 du boîtier 20 sert à empêcher le manchon 36 de reculer vers l'arrière, comme cela va être montré en relation avec les figures 5 et 6.

Le connecteur 20 comporte en effet un mécanisme d'encliquetage qui assure le maintien de l'ensemble de fixation 30 en position montée. Ce mécanisme d'encliquetage est constitué principalement par le ressort 34, et les différentes surfaces et structures qui leur permettent de transmettre leur force de rappel : vers l'avant, sur le contact 32, la surface d'appui de ressort 37 ; vers l'arrière, la surfaces d'appui de ressort 38 formée sur le manchon, les ergots de blocage axial 42 du manchon 36, coopérant avec la partie 48 du boîtier 20.

A la fin du montage de l'ensemble de fixation de câble, l'étape de verrouillage (Figs.5 et 6) permet de placer l'ensemble de fixation de câble en position montée et d'assurer le blocage axial et le blocage en rotation du manchon 36, de la manière suivante.

En plus des ergots 42A, le manchon 36A comporte des repères 45A. Ces repères sont constitués dans ce mode de réalisation par de courtes nervures axiales formées en saillie sur la surface externe du manchon 36A. Ces nervures axiales ou repères 45A s'étendent vers l'arrière à partir des ergots 42A. Notamment, en vue arrière (comme on le voit sur la Fig.1) ces repères 45A s'inscrivent à l'intérieur de la surface occupée par les ergots 42A.

Lors de la première étape de montage du connecteur 10, ces repères 45A sont insérés en totalité à l'intérieur du logement 26.

Le logement 26 est prévu avec des rainures 50 aménagées pour permettre le passage des repères 45 de la manière suivante.

Lors de l'étape de verrouillage, on relâche le manchon 36A. Comme le ressort 34A exerce une force vers l'arrière sur le manchon 36A, celui-ci recule alors jusqu'à ce que les ergots 42A se bloquent contrent une surface de blocage axial de manchon 47A prévue à l'intérieur du logement 26 sur la partie 48 (Fig.6). Le manchon 36A est alors bloqué axialement dans sa position axiale finale (position montée). Du fait de ce déplacement vers l'arrière (flèche B dans la vue de détail de la figure 6), les repères 45A qui jusque-là étaient entièrement à l'intérieur du boîtier 20 dépassent légèrement de celui-ci, comme on le voit pour les repères 45B, 45C et 45D sur la Fig.1. L'opérateur qui est en train de monter l'ensemble de fixation de câble 30A peut ainsi contrôler que le manchon 36A qu'il vient de monter s'est positionné convenablement.

Les repères 45 assurent non seulement une fonction de témoin de montage, mais aussi une fonction de blocage en rotation. En effet, lors du recul du manchon 36A pour atteindre la position axiale finale, les repères 45A s'introduisent dans les rainures 50 correspondantes aménagées à l'intérieur du logement 26 pour les accueillir. Ces rainures épousent (avec jeu) la forme extérieure des repères 45A et par suite, empêchent toute rotation du manchon 36A. Le manchon 36A est ainsi empêché de tourner, par suite par exemple de vibrations, pour se retrouver dans la position angulaire atteinte à la fin de la première étape de montage (angle α1) dans laquelle le manchon 36A pourrait éventuellement ressortir du logement 26.

Les différentes figures font bien apparaître la compacité du connecteur 10. Comme on peut le voir, les ensembles de fixation 30 sont tous insérés via une ouverture unique, délimitée sur la face arrière 25 du logement 26 par son contour 27. Pour chaque paire de manchons 36 adjacents, les parties des manchons 36 les plus proches l'une de l'autre sont directement en regard l'une de l'autre, c'est-à-dire plus précisément ne sont séparées par aucune cloison du boîtier 20. Grâce à cela, l'entraxe d entre des manchons 36 peut être réduit à une valeur très faible, notamment une valeur inférieure à 1,2 D où D est le diamètre extérieur des manchons 36.

Quoique la présente invention ait été décrite en se référant à un exemple de réalisation spécifique, il est évident que différentes modifications et différents changements peuvent être effectués par rapport à cet exemple sans sortir de la portée générale de l'invention telle que définie par les revendications. Par conséquent, la description et les dessins doivent être considérés dans un sens illustratif plutôt que restrictif.

## Revendications

1. Connecteur (10) comprenant un boîtier (20), et au moins un premier et un deuxième ensemble de fixation de câble (30), dans lequel
le boîtier (20) présente un logement (26) interne débouchant par une ouverture dans une face arrière (25) du boîtier ;
chacun desdits premier et deuxième ensemble de fixation de câble présente un axe (X), et comporte un contact (32) et un manchon (36), ledit contact (32) étant configuré pour être fixé à une extrémité d'un câble (40) préalablement passé à travers le manchon (36) ;
le connecteur présente, pour chacun desdits premier et deuxième ensemble de fixation de câble (30), une connexion baïonnette qui comporte au moins une surface de guidage (49) formée dans le boîtier et permet de monter l'ensemble de fixation de câble (30) au moins en partie dans le logement interne du boîtier ; et
le boîtier et lesdits premier et deuxième ensemble de fixation de câble sont configurés de telle sorte que, lors dudit montage, lesdits premier et deuxième ensemble de fixation de câble sont introduits par ladite ouverture commune dans le boîtier.

2. Connecteur selon la revendication 1 dans lequel, pour chacun desdits premier et deuxième ensemble de fixation de câble (30) :
- l'ensemble de fixation de câble (30) et le boîtier (20) sont agencés de telle sorte que lorsque l'ensemble de fixation de câble est monté au moins en partie dans le logement interne du boîtier, ladite au moins une surface de guidage (49) coopère avec le manchon (36) de manière à bloquer tous les degrés de liberté du manchon sauf une translation par rapport à l'axe de l'ensemble de fixation et une rotation autour de cet axe.

3. Connecteur selon la revendication 2 dans lequel, dans chacun desdits premier et deuxième ensemble de fixation de câble (30), au niveau axialement de ladite au moins une surface de guidage (49), ladite au moins une surface de guidage de l'ensemble de fixation de câble considéré ne s'étend que sur une partie de la périphérie du manchon (36), et des portions des manchons du premier et du deuxième ensemble de fixation de câble les plus proches l'une de l'autre sont directement en regard l'une de l'autre, n'étant séparées l'une de l'autre par aucune cloison du boîtier (20).

4. Connecteur selon la revendication 2 ou 3 dans lequel, en vue suivant la direction d'insertion, au moins pour un desdits ensembles de fixation de câble, ladite au moins une surface de guidage (49) s'étend sur deux secteurs angulaires (S1,S2) opposés l'un à l'autre.

5. Connecteur selon l'une quelconque des revendications 1 à 4 comprenant, pour au moins un desdits premier et deuxième ensemble de fixation de câble (30), un mécanisme d'encliquetage permettant à l'ensemble de fixation de câble (30), à l'issue du montage, d'être verrouillé en position montée, et ainsi d'être maintenu en position fixe par rapport au boîtier (20).

6. Connecteur selon la revendication 5 dans lequel, pour au moins un desdits premier et deuxième ensemble de fixation de câble (30) :
le mécanisme d'encliquetage comprend un ressort (34) ;
le contact (32) est configuré pour, après avoir été fixé à l'extrémité du câble (40) préalablement passé à travers le manchon (36), être alors monté dans une direction d'insertion (X) suivant l'axe de l'ensemble de fixation en passant à travers l'ouverture de la face arrière du boîtier (20) ;
l'ensemble de fixation de câble (30) et le boîtier (20) sont agencés de telle sorte que lorsque l'ensemble de fixation de câble est en position montée, le ressort (34) est comprimé, et, en prenant appui sur le boîtier (20), appuie sur le contact (32) suivant la direction d'insertion, et par suite bloque axialement le contact par rapport au boîtier suivant la direction d'insertion.

7. Connecteur selon la revendication 6, dans lequel le contact (32) présente une surface d'appui de ressort du contact (37) disposée de telle sorte que le ressort (34) disposé autour de l'extrémité du câble (40) puisse appliquer une force de compression à la surface d'appui de ressort du contact (37) suivant une direction axiale de celui-ci.

8. Connecteur selon la revendication 6 ou 7 dans lequel
le manchon présente au moins un ergot (42) de blocage axial, agencé en saillie sur sa surface externe ; et
le boîtier et l'ensemble de fixation de câble considéré sont configurés de telle sorte qu'en position montée, sous l'effet de la pression du ressort (34), le manchon (36) est poussé vers l'arrière dans la position montée dans laquelle ledit au moins un ergot (42) de blocage axial est en appui sur au moins une surface (47) de blocage axial de manchon du boîtier, qui bloque ledit au moins un ergot de blocage axial (42) vers l'arrière et empêche ainsi tout déplacement du manchon (36) vers l'arrière.

9. Connecteur selon la revendication 8, dans lequel le manchon (36) de l'ensemble de fixation de câble considéré et le boîtier (20) sont configurés de telle sorte que :
- le manchon de l'ensemble de fixation de câble considéré, placé dans une première position angulaire (α1), peut être introduit dans le logement (26) du boîtier suivant la direction d'insertion, puis
- le manchon (36) peut être alors amené à tourner autour de l'axe de l'ensemble de fixation pour atteindre une deuxième position angulaire (α2), dans laquelle ladite au moins une surface de blocage axial de manchon (47) du boîtier bloque ledit au moins un ergot (42) de blocage axial vers l'arrière.

10. Connecteur selon l'une quelconque des revendications 1 à 9, dans lequel au moins pour un ensemble de fixation de câble (30) considéré, le manchon (36) de l'ensemble de fixation de câble considéré et le boîtier (20) sont configurés de telle sorte que :
- le boîtier présente au moins une surface de blocage en rotation (50), qui n'est pas de révolution autour de la direction d'insertion (X) ; et
- le manchon (30) présente au moins un ergot anti-rotation (45), agencé en saillie sur sa surface externe ; et
l'ensemble de fixation de câble (30) considéré et le boîtier (20) sont agencés de telle sorte que lors du montage de l'ensemble de fixation de câble (30) considéré au moins en partie dans le logement interne du boîtier :
- l'ensemble de fixation de câble est introduit dans le logement (26) du boîtier suivant la direction d'insertion par l'ouverture du boîtier jusqu'à ce que le manchon atteigne axialement une première position axiale (X1), et angulairement, une première position angulaire (α1) ; puis
- le manchon (36) tourne alors autour de l'axe de l'ensemble de fixation pour atteindre une deuxième position angulaire (α2) ;
- le manchon coulisse alors axialement par rapport au boîtier pour atteindre une deuxième position axiale (X2) située en arrière de la première position axiale ; et
- lorsque le manchon est dans la deuxième position axiale (X2), l'ergot anti-rotation coopère avec ladite au moins une surface de blocage en rotation (50) de manière à empêcher une rotation du manchon autour de l'axe de l'ensemble de fixation.

11. Connecteur selon la revendication 10, dans lequel au moins pour l'ensemble de fixation de câble (30) considéré, le manchon comporte un repère (45), l'ensemble de fixation de câble (30) et le manchon (36) sont configurés de telle sorte que lorsque le manchon (36) est dans la première position axiale (X1), le repère n'est pas visible sur un côté arrière du boîtier, alors que lorsque le manchon (36) est dans la deuxième position axiale (X2), le repère (45) est visible, et de préférence dépasse, sur le côté arrière du boîtier.

12. Connecteur selon la revendication 11, dans lequel le repère (45) est un repère de couleur prévu sur la surface externe du manchon (36) et/ou une saillie aménagée sur ladite surface externe.

13. Connecteur selon l'une quelconque des revendications 1 à 12, dans lequel le contact (32) est un contact pour un ou plusieurs conducteurs électriques et/ou une ou plusieurs fibres optiques.

## Patentansprüche

1. Verbinder (10), umfassend ein Gehäuse (20) und wenigstens eine erste und eine zweite Kabelbefestigungsanordnung (30), wobei
das Gehäuse (20) eine innere Aufnahme (26) aufweist, die über eine Öffnung in eine Rückseite (25) des Gehäuses mündet,
wobei eine jeder der ersten und der zweiten Kabelbefestigungsanordnung eine Achse (X) aufweist und einen Kontakt (32) und eine Hülse (36) umfasst, wobei der Kontakt (32) dazu ausgelegt ist, an einem Ende eines Kabels (40) befestigt zu werden, das zuvor durch die Hülse (36) geführt wurde,
der Verbinder für eine jede der ersten und der zweiten Kabelbefestigungsanordnung (30) eine Bajonettverbindung aufweist, die wenigstens eine in dem Gehäuse ausgebildete Führungsfläche (49) aufweist und ermöglicht, die Kabelbefestigungsanordnung (30) wenigstens teilweise in der inneren Aufnahme des Gehäuses anzubringen, und
das Gehäuse sowie die erste und die zweite Kabelbefestigungsanordnung derart ausgelegt sind, dass bei der Montage die erste und die zweite Kabelbefestigungsanordnung durch die gemeinsame Öffnung in das Gehäuse eingeführt werden.

2. Verbinder nach Anspruch 1, bei dem für eine jede der ersten und der zweiten Kabelbefestigungsanordnung (30):
- die Kabelbefestigungsanordnung (30) und das Gehäuse (20) so angeordnet sind, dass, wenn die Kabelbefestigungsanordnung wenigstens teilweise in der inneren Aufnahme des Gehäuses angebracht ist, die wenigstens eine Führungsfläche (49) mit der Hülse (36) zusammenwirkt, um alle Freiheitsgrade der Hülse außer einer Verschiebung gegenüber der Achse der Befestigungsanordnung und einer Drehung um diese Achse zu blockieren.

3. Verbinder nach Anspruch 2, bei dem bei jeder der ersten und zweiten Kabelbefestigungsanordnung (30), im Bereich axial von der wenigstens einen Führungsfläche (49), die wenigstens eine Führungsfläche der betrachteten Kabelbefestigungsanordnung sich nur über einen Teil des Umfangs der Hülse (36) erstreckt, und Abschnitte der Hülsen der ersten und der zweiten Kabelbefestigungsanordnung, die einander am nächsten liegen, direkt einander gegenüberliegen, wobei sie durch keine Trennwand des Gehäuses (20) voneinander getrennt sind.

4. Verbinder nach Anspruch 2 oder 3, **dadurch gekennzeichnet, dass** sich die wenigstens eine Führungsfläche (49) in Einführrichtung gesehen, wenigstens für eine der Kabelbefestigungsanordnungen, über zwei einander gegenüberliegende Winkelsektoren (S1, S2) erstreckt.

5. Verbinder nach einem der Ansprüche 1 bis 4, umfassend für wenigstens eine der ersten und der zweiten Kabelbefestigungsanordnung (30) einen Einrastmechanismus, welcher der Kabelbefestigungsanordnung (30) am Ende der Montage ermöglicht, in montierter Position eingerastet und somit in gegenüber dem Gehäuse (20) fester Position gehalten zu werden.

6. Verbinder nach Anspruch 5, bei dem für wenigstens eine der ersten und der zweiten Kabelbefestigungsanordnung (30):
der Einrastmechanismus eine Feder (34) umfasst,
der Kontakt (32) dazu ausgelegt ist, dass er, nachdem er an dem Ende des zuvor durch die Hülse (36) geführten Kabels (40) befestigt worden ist, dann in einer Einführrichtung (X) entlang der Achse der Befestigungsanordnung unter Durchqueren der Öffnung der Rückseite des Gehäuses (20) angebracht wird,
die Kabelbefestigungsanordnung (30) und das Gehäuse (20) so angeordnet sind, dass die Feder (34) dann, wenn die Kabelbefestigungsanordnung sich in montierter Position befindet, eingefedert wird und am Gehäuse (20) anliegend in Einführrichtung auf den Kontakt (32) drückt und in der Folge den Kontakt gegenüber dem Gehäuse in der Einführrichtung axial blockiert.

7. Verbinder nach Anspruch 6, bei dem der Kontakt (32) eine Kontakt-Federanlagefläche (37) aufweist, die so angeordnet ist, dass die Feder (34), welche um das Ende des Kabels (40) herum angeordnet ist, eine Druckkraft an die Kontakt-Federanlagefläche (37) in einer axialen Richtung davon anlegen kann.

8. Verbinder nach Anspruch 6 oder 7, bei dem
die Hülse wenigstens einen Nocken (42) zum axialen Blockieren aufweist, der an ihrer Außenfläche vorspringend angeordnet ist; und
das Gehäuse und die betrachtete Kabelbefestigungsanordnung derart ausgestaltet sind, dass in montierter Position, unter der Wirkung des Drucks der Feder (34), die Hülse (36) nach hinten in die montierte Position gedrückt wird, in welcher der wenigstens eine Nocken (42) zum axialen Blockieren an wenigstens einer Fläche (47) zum axialen Blockieren der Hülse des Gehäuses anliegt, die den wenigstens einen Nocken (42) zum axialen Blockieren nach hinten sperrt und somit jegliche Bewegung der Hülse (36) nach hinten verhindert.

9. Verbinder nach Anspruch 8, bei dem die Hülse (36) der betrachteten Kabelbefestigungsanordnung und das Gehäuse (20) so ausgelegt sind, dass:
- die in eine erste Winkelstellung (α1) gebrachte Hülse der betrachteten Kabelbefestigungsanordnung entlang der Einführrichtung in die Aufnahme (26) des Gehäuses eingeführt werden kann, dann
- die Hülse (36) veranlasst werden kann, sich um die Achse der Befestigungsanordnung zu drehen, um eine zweite Winkelposition (α2) zu erreichen, in der die wenigstens eine Fläche (47) zum axialen Blockieren der Hülse des Gehäuses den wenigstens einen Nocken (42) zum axialen Blockieren nach hinten sperrt.

10. Verbinder nach einem der Ansprüche 1 bis 9, bei dem wenigstens für eine betrachtete Kabelbefestigungsanordnung (30) die Hülse (36) der betrachteten Kabelbefestigungsanordnung und das Gehäuse (20) so ausgelegt sind, dass:
- das Gehäuse wenigstens eine Drehblockierfläche (50) aufweist, die nicht um die Einführrichtung (X) umlaufend ist, und
- die Hülse (30) wenigstens einen Verdrehsicherungsnocken (45) aufweist, der an ihrer Außenfläche vorspringend angeordnet ist, und
die betrachtete Kabelbefestigungsanordnung (30) und das Gehäuse (20) so angeordnet sind, dass bei der Montage der betrachteten Kabelbefestigungsanordnung (30) wenigstens teilweise in der inneren Aufnahme des Gehäuses:
- die Kabelbefestigungsanordnung in die Aufnahme (26) des Gehäuses in Einführrichtung durch die Öffnung des Gehäuses eingeführt wird, bis die Hülse axial eine erste axiale Position (X1) und winkelmäßig eine erste Winkelposition (α1) erreicht, anschließend
- die Hülse (36) sich nun um die Achse der Befestigungsanordnung dreht, um eine zweite Winkelposition (α2) zu erreichen,
- die Hülse nun axial gegenüber dem Gehäuse gleitet, um eine zweite axiale Position (X2) zu erreichen, die hinter der ersten axialen Position gelegen ist, und
- wenn sich die Hülse in der zweiten axialen Position (X2) befindet, der Verdrehsicherungsnocken mit der wenigstens einen Drehblockierfläche (50) zusammenwirkt, um eine Drehung der Hülse um die Achse der Befestigungsanordnung zu verhindern.

11. Verbinder nach Anspruch 10, bei dem wenigstens für die betrachtete Kabelbefestigungsanordnung (30) die Hülse eine Markierung (45) aufweist, die Kabelbefestigungsanordnung (30) und die Hülse (36) derart ausgelegt sind, dass dann, wenn sich die Hülse (36) in der ersten axialen Position (X1) befindet, die Markierung auf einer Rückseite des Gehäuses nicht sichtbar ist, während dann, wenn sich die Hülse (36) in der zweiten axialen Position (X2) befindet, die Markierung (45) sichtbar ist und vorzugsweise an der Rückseite des Gehäuses vorsteht.

12. Verbinder nach Anspruch 11, bei dem die Markierung (45) eine Farbmarkierung, die auf der Außenfläche der Hülse (36) vorgesehen ist, und/oder ein Vorsprung ist, der an der Außenfläche ausgebildet ist.

13. Verbinder nach einem der Ansprüche 1 bis 12, bei dem der Kontakt (32) ein Kontakt für einen oder mehrere elektrische Leiter und/oder einen oder mehrere Lichtwellenleiter ist.

## Claims

1. A connector (10) comprising a housing (20) and at least a first and a second strand fastener unit (30), wherein
the housing (20) presents an internal chamber (26) opening out via an opening in a rear face (25) of the housing;
each of said first and second strand fastener units presents an axis (X) and includes a contact (32) and a sleeve (36), said contact (32) being configured to be fastened to one end of a strand (40) that has previously been passed through the sleeve (36);
the connector presents, for each of said first and second strand fastener units (30), a bayonet coupling which comprises at least a guide surface (49) formed in the housing and enables at least part of the strand fastener unit (30) to be mounted inside the internal chamber of the housing; and
the housing and said first and second strand fastener units are configured in such a manner that, during said mounting, said first and second strand fastener units are inserted via said common opening into the housing.

2. A connector according to claim 1, wherein, for each of said first and second strand fastener units (30):
- the strand fastener unit (30) and the housing (20) are arranged in such a manner that when the strand fastener unit is mounted at least in part in the internal chamber of the housing, said at least one guide surface (49) co-operates with the sleeve (36) so as to block all degrees of freedom of the sleeve to move other than movement in translation along the axis of the fastener unit and movement in rotation about that axis.

3. A connector according to claim 2, wherein, in each of said first and second strand fastener units (30), said at least one guide surface of the strand fastener unit under consideration extends axially at said at least one guide surface (49) over only a portion of the periphery of the sleeve (36) and leaves portions of the sleeves of the first and second strand fastener units that are closest to each other directly facing each other, being separated from each other by no partition of the housing (20).

4. A connector according to claim 2 or claim 3, wherein, when looking in the insertion direction, for at least one of said strand fastener units, said at least one guide surface (49) extends over two mutually opposite angular sectors (S1, S2).

5. A connector according to any one of claims 1 to 4, including, for at least one of said first and second strand fastener units (30), a snap mechanism enabling the strand fastener unit (30) to be locked in the mounted position at the end of mounting, and thus enabling it to be held in a position that is stationary relative to the housing (20).

6. A connector according to claim 5, wherein, for at least one of said first and second strand fastener units (30) :
the snap mechanism includes a spring (34);
the contact (32) is configured so that after being fastened to the end of the strand (40) previously passed through the sleeve (36), it can then be mounted in an insertion direction (X) along the axis of the fastener unit by passing through the opening in the rear face of the housing (20); and
the strand fastener unit (30) and the housing (20) are arranged in such a manner that when the strand fastener unit is in the mounted position, the spring (34) is compressed, and, by bearing against the housing (20), it bears against the contact (32) in the insertion direction, and consequently blocks the contact against moving relative to the housing in the insertion direction.

7. A connector according to claim 6, wherein the contact (32) presents a spring-bearing surface of the contact (37) arranged in such a manner that the spring (34) arranged around the end of the strand (40) can apply a compression force to the spring-bearing surface of the contact (37) in an axial direction thereof.

8. A connector according to claim 6 or claim 7, wherein:
the sleeve presents at least one axial blocking lug (42) projecting from its outside surface; and
the housing and the strand fastener unit in question are configured in such a manner that in the mounted position, under the effect of pressure from the spring (34), the sleeve (36) is pushed rearwards into the mounted position in which said at least one axial blocking lug (42) bears against at least one sleeve axial blocking surface (47) of the housing, thereby blocking said at least one axial blocking lug (42) in the rearward direction and thus preventing any movement of the sleeve (36) towards the rear.

9. A connector according to claim 8, wherein the sleeve (36) of the strand fastener unit under consideration and the housing (20) are configured in such a manner that:
- the sleeve of the strand fastener unit under consideration, when placed in a first angular position (α1), can be inserted into the chamber (26) of the housing in the insertion direction, and then
- the sleeve (36) can be caused to turn about the axis of the fastener unit in order to reach a second angular position (α2) in which said at least one sleeve axial blocking surface (47) of the housing blocks said at least one axial blocking lug (42) in the rearward direction.

10. A connector according to any one of claims 1 to 9, wherein, at least for a strand fastener unit (30) under consideration, the sleeve (36) of the strand fastener unit under consideration and the housing (20) are configured in such a manner that:
- the housing presents at least one turning-blocking surface (50) that is not a surface of revolution about the insertion direction (X); and
- the sleeve (36) presents at least one anti-turning lug (45) projecting from its outside surface; and
the strand fastener unit (30) under consideration and the housing (20) are arranged in such a manner that while mounting the strand fastener unit (30) under consideration at least in part in the internal chamber of the housing:
- the strand fastener unit is inserted into the chamber (26) of the housing in the insertion direction via the opening of the housing until the sleeve axially reaches a first axial position (X1) and angularly reaches a first angular position (α1); then
- the sleeve (36) turns about the axis of the fastener unit to reach a second angular position (α2);
- the sleeve then slides axially relative to the housing to reach a second axial position (X2) situated to the rear of the first axial position; and
- when the sleeve is in the second axial position (X2), the anti-turning lug co-operates with said at least one turning-blocking surface (50) so as to prevent the sleeve from turning about the axis of the fastener unit.

11. A connector according to claim 10, wherein at least for the strand fastener unit (30) under consideration, the sleeve includes a marker (45), the strand fastener unit (30) and the sleeve (36) being configured in such a manner that when the sleeve (36) is in the first axial position (X1), the marker is not visible at the rear of the housing, whereas when the sleeve (36) is in the second axial position (X2), the marker (45) is visible, and preferably projects beyond, the rear of the housing.

12. A connector according to claim 11, wherein the marker (45) is a colored marker provided on the outside surface of the sleeve (36) and/or a projection formed on said outside surface.

13. A connector according to any one of claims 1 to 12, wherein the contact (32) is a contact for one or more electrical conductors and/or one of more optical fibers.
